# EUROPEAN PATENT SPECIFICATION

(11) **EP 2 827 119 B1**
(45) Date of publication and mention of the grant of the patent: **03.08.2016**
(21) Application number: 14002169.2
(22) Date of filing: 24.06.2014
(51) Int. Cl.: G01M 17/007

(54) **Adapter for fixation of motorcycles on roller test benches**
Adapter zur Stabilisierung von Motorräder auf Walzenprüfstellen
Adapteur pour fixer la moto sur les rouleaux d'essai

(30) Priority: 24.06.2013 CZ 20130485
(43) Date of publication of application: 21.01.2015
(73) Proprietor: Vysoka skola banska - Technicka univerzita Ostrava, 70833 Ostrava-Poruba (CZ)
(72) Inventor: Smiraus, Jakub, 78901 Zabreh (CZ); Famfulik, Jan, 70830 Ostrava 3 (CZ); Mikova, Jana, 72300 Ostrava-Martinov (CZ); Richtar, Michal, 70800 Ostrava 8 (CZ)
(74) Representative: Kendereski, Dusan

(56) References cited:
- EP-A1- 0 930 493
- FR-A- 1 126 530
- FR-A- 1 185 994
- FR-A1- 2 942 039
- US-A- 3 837 219

## Description

### Technical Field

The invention relates to the device for fixation of single-track vehicles with sundry swept volume and of various types such as scooters, road motorcycles, and cross-country motorcycles during measurement on a roller test bench.

### Background Art

At present, the solution for fixation of single-track vehicles on a roller test bench is principally used, where the front wheel of a single-track vehicle is firmly fixed and the rear part of the vehicle in the area of a rear wheel is fixed with straps. A driver maintaining a side tilt stability of the tested vehicle sits on it in the course of testing. The downforce acting on the rear wheel that is in contact with the measuring roller of the test bench is induced by the initial tension of straps.

For example CZ 291080 describes placement and transportation of motorcycles of various types with various swept volume. The document describes the method of fixation of the front wheel of a motorcycle using a vice with a movable and fixed part, while the fixation of the rear part of the motorcycle is effected by a strap. In comparison with the solution according to the invention, this device has a different function and it fulfils it in a different way. It is a standard method of not only fixation for transportation, but also for measurement of the motorcycle on the roller test bench. On the other side, the solution according to the invention allows the same use with shortening of the time necessary for fixation of the motorcycle. Simultaneously, it offers advantages in the form of fast and easy fixation of the measured vehicle and safer as well as more accurate measurement. Analogous solutions are described also in the US 3940978 and US 3733894, i.e. the front wheel is fixed in the course of measurement. The rear wheel that is in contact with the measuring roller is not fixed at all.

Document EP1753639 describes a device for attachment of at least one wheel of the motorcycle to a surface. In comparison with the solution according to the invention, this device has a different function and it does not allow fixation of the motorcycle on the roller test bench because it prevents free rotation of wheels. Analogous solution is described also in the WO9967618.

Admittedly, the device described in the US4196617 fulfils the same function as the solution according to the invention, but in a different way. The rear wheel of the motorcycle must be dismounted during the measurement and the motorcycle is fixed to the measuring device with the help of a spigot passing through the fork spring of the rear wheel of the motorcycle.

Drawbacks of the aforesaid solutions consist in that the downforce on the rear wheel is insufficient, often a wheel spinning on the test bench roller occurs, which devalues the measurement. Another drawback lies in the fact that if the driver is not able to maintain the side tilt stability of the vehicle, the measurement result is significantly distorted. Another drawback lies in the fact that in the case of release of the fixation strap, the health or even life of the driver is downright endangered. The last drawback is a problematic fixation of straps on parts of the single-track vehicle, there is a danger of damage to hoods, seats, and other parts. These drawbacks are completely eliminated by the solution according to the invention.

The apparatus disclosed in FR1126530A is used for testing of vehicles, in particular motorcycles. Driving wheels of a vehicle are fixed on a roller test bench by means of various types of support rollers. This apparatus fulfils the same function as the solution according to the invention, but in a different way. Whereas the driving wheel is similarly maintained in position by means of rolling elements, the wheel is pressed against the test bench roller by means of a chain. The apparatus therefore operates in a more complicated manner, despite of providing the same effect.

The document EP0930493A1 describes an apparatus for controlling suspension of a motorcycle. The apparatus is used for monitoring vertical movements of a chassis of a motorcycle by means of a roller test bench. In principle, the electromechanical system is based on comparing the position of a chassis and a platform. This apparatus has an utterly different function and uses a different assembly.

The apparatus of FR2942039A1 is similarly used to fix single-track vehicles during testing. The driving wheel of a motorcycle is fixed on a test bench roller with the help of a support frame linked through a lever mechanism to the test roller. However, the apparatus does not exert any pressure force on the tested wheel towards the test bench roller. This apparatus fulfils the same function as the solution according to the invention, but in a different way and without the advantages of this invention.

The apparatus disclosed in FR1185994A is used for alternating test conditions for motorcycle engine measurements by means of a roller test bench. The driving wheel of a motorcycle is fixed on the test bench roller by its attachment to a fork interconnected with a mechanical or spring pre-load device via a lever mechanism. The pre-load device fitted with a lever presses the driving wheel against a dynamometre. This apparatus has an utterly different function and uses a different assembly.

Document US3837219A1 describes an apparatus for simulating the effects of vehicle roadway-inertia loads on an engine, while the vehicle is operated on a dynamometre. The range of inertia loads is achieved by combining three flywheels, each having a different mass. This apparatus does not serve the purpose of maintaining the wheel in position relative the test roller of a dynamometre, but rather for modifying the test conditions. Hence, it does not provide any of the advantages of this invention.

### Disclosure of the invention

The design of the adapter allows very fast and simple fixation of single-track vehicles in the course of measurement on a roller test bench and simple fixation during transportation.

The adapter is intentionally designed so that it can be used to fixate single-track vehicles with various operating scope (cross-country, road, and other vehicles). Its advantage is the transfer of shear forces by mechanical elements as well as ensuring constant contact of a wheel with the roller of dynamometric test bench with utilisation of vertical force induced by the device without the need for using complicated fixation techniques with fastening straps. Wheels suitable for this application are only wheels with no obstacles (e.g. air valve, counterweight) on both sides of the rim - that is, the surface of the rim and the space above this surface allow free rolling of rolling elements. The device can be used for single-roller as well as two-roller test benches.

The device (adapter) consists of rolling elements, connecting elements, swinging bearing of connecting elements to arm(s), arm(s), journal, main console, load element (element inducing the vertical force) and optionally also arm connecting element.

The rolling elements are from both sides pressed by one or more coupling elements to the inner edge of the rim of the measured wheel. The coupling elements are connected on both sides of the measured wheel by means of two bearings with the arms or arm, ideally U-shaped. The bearings can be fixed or swinging. The arm or arms are firmly connected with the test bench floor and are connected in a swinging way by means of the journal with the main console that is fixedly connected with the test bench floor.

In the version with two arms, the opposite ends of arms are connected with the connecting element on which acts the vertical force induced by the load element. In the embodiment with one arm, the vertical force induced by the load element acts in the arm arc.

The load element according to the invention means the element inducing the vertical force, for example toothed lock, screw connection or weight.

The rolling elements can be in the shape of cone or cylinder or other shape having the feature that its diameter is increasing in the direction out of the measured wheel rim. The rolling elements can form an angle up to 45° with the axis of rotation of the measured wheel.

The measurement is performed so that the vehicle is placed with its measured wheel on the roller of test bench in such position that the vertical axis Z of the measured wheel is identical with the vertical axis of the roller of test bench and simultaneously the longitudinal axis Y of the wheel rotation is parallel with the Y axis of rotation of the roller of the measuring test bench. This results in arrestment of longitudinal forces (in the X axis) arising in the axis of the vehicle and simultaneously in blocking of lateral forces (in the Y axis) necessary to ensure lateral stability of the single-track vehicle in the course of measurement. The rolling elements, ideally with soft surface, are rolling on the inner edge of the rim of the measured wheel. The transversal and longitudinal forces are transmitted to the test bench floor through the coupling elements. The vertical force induced by the load element is transmitted through the arm or arms to the swinging or fixed bearings and from here through the coupling elements to the rolling elements. This gives rise to sufficient vertical force between the measured wheel of the single-track vehicle and the measuring roller of the test bench and simultaneously this prevents skid or spinning of the measured wheel against the measuring roller.

Solution according to the invention brings increase of safety and precision of measurement on roller test benches. At the same time, it offers saving of time of preparation for the measurement thus increasing productivity of expensive measuring device.

The adapter can be utilised on roller test benches for measurement of performance of single-track vehicles. After very simple mounting of the device on the test bench, the measurements can be performed immediately without problematic tying and fixing of the motorcycle. The very mounting consists only in fastening of the main consoles and the element creating steady vertical force at the arm ends. Significant advantage is the already mentioned simple fixation of the motorcycle on roller test bench and the fact that the measurement is not distorted by skid, spinning or so called sticking of tyre. With proper use, also the safety of the very measurement is increased.

Other possible use can be for measurement of brake efficiency on test benches or at inspection facilities. Mounting is then the same as in the previous case with the difference of fixing to the floor of the test bench. The advantages of the device represent here stability during the braking performance test, when the very vehicle is expelled from the roller area by the torque of test rollers.

The device can be utilised also for stationary fixation of single-track vehicles. Such solution brings about the advantage in the form of fixation of the motorcycle by the resistant parts, in this case the wheel, thus not by parts of hoods or seats that are susceptible to damage. However the floor of the transport space should be accommodated to such utilisation.

### Brief description of the drawings

The invention is illustrated using drawings, where:
Fig. 1a shows the adapter with toothed lock with swinging bearing with two arms,
Fig. 1b shows top plan view on the adapter with toothed lock with swinging bearing with two arms,
Fig. 2a shows the adapter with weight with fixed bearing with two arms,
Fig. 2b shows top plan view on the adapter with weight with fixed bearing with two arms,
Fig. 3a shows the adapter with weight with swinging bearing with one U-shaped arm and
Fig. 3b shows top plan view on the adapter with weight with the swinging bearing with one U-shaped arm.

### Examples of embodiment of the invention

### Example 1

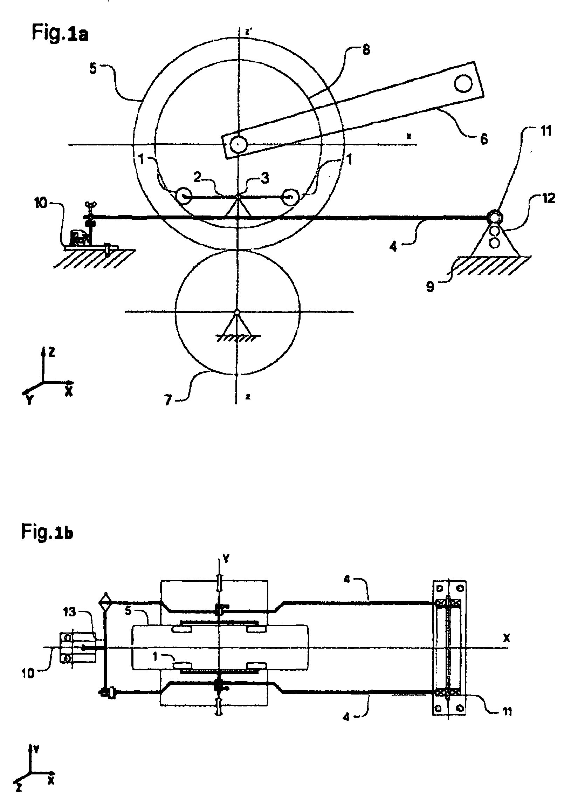

Adapter for ensuring stability of a measured wheel 5 of a single-track vehicle according to the figures 1a and 1b is created by rolling elements 1 in the shape of cone, that are pressed by one or more coupling elements 2 to the inner edge 8 of the rim of the measured wheel 5. The coupling elements 2 are connected on both sides of the measured wheel 5 by means of two swinging bearings 3 with two arms 4, while the arms 4, are firmly connected with the roller test bench floor 9. Pairs of arms 4 are connected in a swinging way by means of the journal 11 to the main console 12 that is fixedly connected with the test bench floor 9. The opposite ends of arms 4 are connected with the connecting element 13. The vertical force induced by the toothed lock 10 acts on the connecting element 13.

The measurement is performed after placing of the measured wheel 5 on the roller 7 of test bench in such position that the vertical Z axis of the measured wheel 5 is identical with the vertical axis of the roller 7 of test bench and simultaneously the longitudinal Y axis of rotation of the wheel 5 is parallel with the Y axis of rotation of the roller 7 of the measuring test bench. This results in arrestment of longitudinal forces (in the X axis) arising in the axis of the vehicle and simultaneously in blocking of lateral forces (in the Y axis) necessary to ensure lateral stability of the single-track vehicle in the course of measurement. The rolling elements 1 are rolling on the inner edge 8 of the rim of the measured wheel 5. The transversal and longitudinal forces are transmitted to the test bench floor 9 through the coupling elements 2. The vertical force induced by the toothed lock 10 is transmitted through the arms 4, to the swinging bearings 3 and from here through the coupling elements 2 to the rolling elements 1. This gives rise to sufficient vertical force between the measured wheel 5 of the single-track vehicle and the measuring roller 7 of the test bench and simultaneously this prevents skid or spinning of the measured wheel 5 against the measuring roller 7.

### Example 2

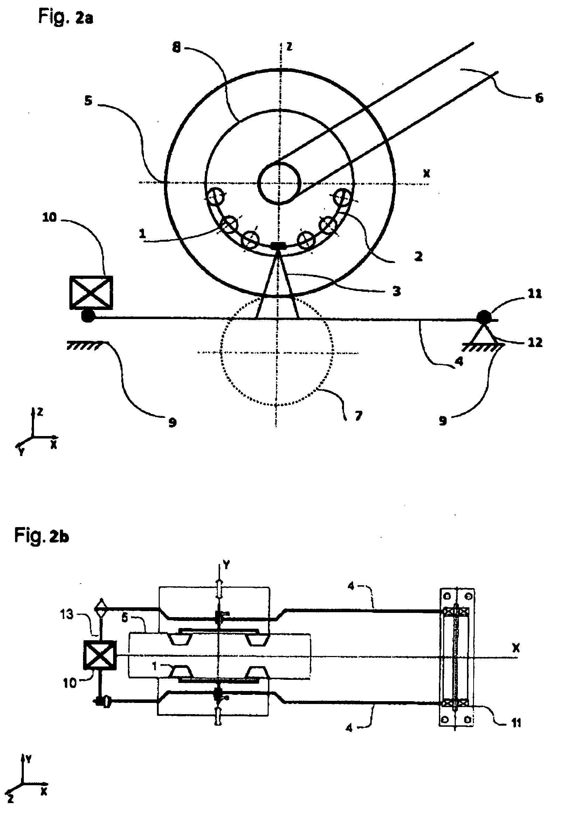

Adapter for ensuring stability of a measured wheel 5 of a single-track vehicle according to the figures 2a and 2b is created by rolling elements 1 in the shape of cone, that are pressed by one or more coupling elements 2 to the inner edge 8 of the rim of the measured wheel 5. The coupling elements 2 are connected on both sides of the measured wheel 5 by means of two fixed bearings 3 with two arms 4 , while the arms 4, are firmly connected with the roller test bench floor 9. Pair of arms 4 is connected in a swinging way by means of the journal 11 to the main console 12 that is fixedly connected with the test bench floor 9. The opposite ends of arms 4, are connected with the connecting element 13. The vertical force induced by the weight 10 acts on the connecting element 13.

The measurement is performed after placing of the measured wheel 5 on the roller 7 of test bench in such position that the vertical Z axis of the measured wheel 5 is identical with the vertical axis of the roller 7 of test bench and simultaneously the longitudinal Y axis of rotation of the wheel 5 is parallel with the Y axis of rotation of the roller 7 of the measuring test bench. This results in arrestment of longitudinal forces (in the X axis) arising in the axis of the vehicle and simultaneously in blocking of lateral forces (in the Y axis) necessary to ensure lateral stability of the single-track vehicle in the course of measurement. The rolling elements 1 are rolling on the inner edge 8 of the rim of the measured wheel 5. The transversal and longitudinal forces are transmitted to the test bench floor 9 through the coupling elements 2. The vertical force induced by the weight 10 is transmitted through the arms 4, to the fixed bearings 3 and from here through the coupling elements 2 to the rolling elements 1. This gives rise to sufficient vertical force between the measured wheel 5 of the single-track vehicle and the measuring roller 7 of the test bench and simultaneously this prevents skid or spinning of the measured wheel 5 against the measuring roller 7.

### Example 3

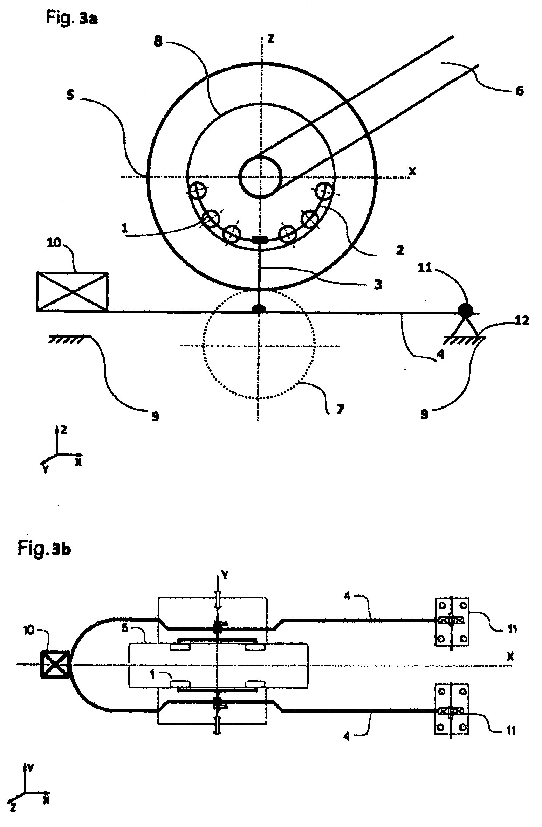

Adapter for ensuring stability of a measured wheel 5 of a single-track vehicle according to the figures 3a and 3b is created by rolling elements 1 in the shape of cone, that are pressed by one or more coupling elements 2 to the inner edge 8 of the rim of the measured wheel 5. The coupling elements 2 are connected on both sides of the measured wheel 5 by means of two swinging bearings 3 with one U-shaped arm 4, while the arm 4 is firmly connected with the roller test bench floor 9. The arm 4 is connected in a swinging way by means of the journal 11 to the main console 12 that is fixedly connected with the test bench floor 9. The vertical force induced by the weight 10 acts in the arc of the arm 4.

The measurement is performed after placing of the measured wheel 5 on the roller 7 of test bench in such position that the vertical Z axis of the measured wheel 5 is identical with the vertical axis of the roller 7 of test bench and simultaneously the longitudinal Y axis of rotation of the wheel 5 is parallel with the Y axis of rotation of the roller 7 of the measuring test bench. This results in arrestment of longitudinal forces (in the X axis) arising in the axis of the vehicle and simultaneously in blocking of lateral forces (in the Y axis) necessary to ensure lateral stability of the single-track vehicle in the course of measurement. The rolling elements 1 are rolling on the inner edge 8 of the rim of the measured wheel 5. The transversal and longitudinal forces are transmitted to the test bench floor through these coupling elements. The vertical force induced by the weight 10 is transmitted through the arm 4 to the swinging bearings 3 and from here through the coupling elements 2 to the rolling elements 1. This gives rise to sufficient vertical force between the measured wheel 5 of the single-track vehicle and the measuring roller 7 of the test bench and simultaneously this prevents skid or spinning of the measured wheel 5 against the measuring roller 7.

### Industrial applicability

The device (adapter) according to the invention can be utilised for stationary fixation during handling, transportation or long-term immobilization of single-track vehicles, for measurement of performance of single-track vehicles, and for measurement of brake efficiency on roller test benches, at inspection facilities and road vehicles laboratories.

### List of reference signs

1- Rolling element
2- Coupling element
3- Bearing of connecting element to arm
4- Arm
5- Measured vehicle wheel
6- Undercarriage measured wheel control
7- Test bench roller
8- Rim inner edge
9- Test bench floor
10- Load element
11- Journal
12- Main console
13- Connecting element of arms

## Claims

1. Adapter configured to ensure stability of a measured wheel (5) of a single-track vehicle placed on a roller (7) of a roller test bench, **characterized in that** it comprises rolling elements (1) arranged on each side of the measured wheel (5) and pressed by a pair of coupling elements (2) to the inner edge (8) of the rim of the measured wheel (5), wherein each coupling element (2) is furthermore connected by means of a bearing (3) with an arm (4) that is at one end connected in a swinging way by means of a journal (11) with a main console (12) fixedly connected with a test bench floor (9) and at the opposite end connected with a load element (10) exerting vertical force on the arm (4).

2. Adapter according to claim 1, **characterized in that** the rolling elements (1) are in the shape of straight circular cone or other shape having the feature that its diameter is increasing in the direction out of the rim of the measured wheel (5) and that the axis of rotation of the rolling elements (1) is parallel with the axis of rotation of the wheel (5) and simultaneously is fixed towards the coupling element (2) or elements (2).

3. Adapter according to claim 1, **characterized in that** the rolling elements (1) form an angle up to 45° with the axis of rotation of the measured wheel (5), wherein the rolling elements (1) are in the shape of a circular cylinder.

4. Adapter according to any of the claims hereinbefore, **characterized in that** the bearing (3) is swinging or fixed.

5. Adapter according to any of the claims hereinbefore, **characterized in that** the arm (4) is U-shaped.

6. Adapter according to claims 1 to 4, **characterized in that** the opposite ends of two arms (4) are connected with a connecting element (13), said connecting element (13) is capable of distributing the vertical force exerted by the load element (10) on the arms (4).

7. Adapter according to any of the claims hereinbefore, **characterized in that** the load element (10) is a toothed lock, screw connection or weight.

## Patentansprüche

1. Adapter, ausgestaltet zum Sicherstellen der Stabilität eines zu vermessenden Rads (5) eines auf einer Rolle (7) eines Rollenprüfstands angebrachten Einspurfahrzeuges, **dadurch gekennzeichnet, dass** er abrollende Elemente (1) umfasst, die beidseits des zu vermessenden Rads (5) angeordnet sind und die mittels eines Paars von Koppelelementen (2) gegen die innere Kante (8) der Felge des zu vermessenden Rads (5) gedrückt werden, wobei jedes der Koppelelemente (2) ferner mittels eines Lagers (3) mit einem Arm (4) verbunden ist, dessen erstes Ende mittels eines Drehbolzens (11) an einer mit dem Boden (9) des Prüfstands fest verbundenen Hauptkonsole (12) angelenkt ist und dessen gegenüberliegendes Ende mit einem Belastungselement (10) zum Erzeugen einer auf den Arm (4) zu wirkenden vertikalen Kraft verbunden ist.

2. Adapter nach Anspruch 1, **dadurch gekennzeichnet, dass** die abrollenden Elemente (1) die Gestalt eines geraden Kreiskegels oder eine andere, in der Richtung weg von der Felge des zu vermessenden Rads (5) im Durchmesser zunehmende Gestalt aufweisen, und dass die Drehachse der abrollenden Elemente (1) parallel zu der Drehachse des Rads (5) verläuft und gleichzeitig fest gegenüber dem Koppelelement (2) bzw. den Koppelelementen (2) angeordnet ist.

3. Adapter nach Anspruch 1, **dadurch gekennzeichnet, dass** die abrollenden Elemente (1) einen Winkel von höchstens 45° mit der Drehachse des zu vermessenden Rads (5) einschließen, wobei die abrollenden Elemente (1) die Gestalt eines Kreiszylinders aufweisen.

4. Adapter nach einem der vorangehenden Ansprüche, **dadurch gekennzeichnet, dass** das Lager (3) als ein Pendellager oder als ein starres Lager ausgebildet ist.

5. Adapter nach einem der vorangehenden Ansprüche, **dadurch gekennzeichnet, dass** der Arm (4) eine U-förmige Gestalt aufweist.

6. Adapter nach einem der Ansprüche 1 bis 4, **dadurch gekennzeichnet, dass** das die gegenüberliegenden Enden der beiden Arme (4) mit einem Verbindungselement (13) verbunden sind, wobei das Verbindungselement (13) derart ausgestaltet ist, dass es die von dem Belastungselement (10) erzeugte und auf die Arme (4) wirkende Kraft verteilt.

7. Adapter nach einem der vorangehenden Ansprüche, **dadurch gekennzeichnet, dass** das Belastungselement (10) aus einem verzahnten Verschluss, einer Schraubverbindung oder einem Beschwerungsgewicht besteht.

## Revendications

1. Adaptateur configuré pour assurer
la stabilité de la roue mesurée (5) du véhicule à voie unique installé sur un rouleau (7) d'un banc de test à rouleaux, **caractérisé en ce qu'**il est constitué par des éléments roulants (1) arrangés de chaque côté de la roue mesurée (5) et pressés par un couple d'éléments d'accouplement (2) vers le bord intérieur (8) de la jante de la roue mesurée (5), dans lequel chaque élément d'accouplement (2) est, en outre, connecté au moyen d'un palier (3) avec un bras (4) lequel est connecté à une extrémité de manière pivotante au moyen d'un palier lisse (11) avec la console principale (12) connectée solidement avec un plancher (9) du banc de test et à l'extrémité opposée il est connecté avec un élément de chargement (10) exerçant la force verticale sur le bras (4).

2. Adaptateur selon la revendication 1, **caractérisé en ce que** les éléments roulants (1) ont la forme d'un cône circulaire droit ou one aute forme dont le diamètre augmente dans la direction en dehors de la jante de la roue mesurée (5) et que l'axe de rotation des éléments roulants (1) est parallèle avec l'axe de rotation de la roue (5) et simultanément est fixé vers l'élément (2) ou éléments (2) d'accouplement.

3. Adaptateur selon la revendication 1, **caractérisé en ce que** les éléments roulants (1) forment un angle jusqu'à 45° avec l'axe de rotation de la roue mesurée (5), dans lequel les éléments roulants (1) ont la forme d'un cône circulaire.

4. Adaptateur selon l'une quelconque des revendications ci-dessus, **caractérisé en ce que** le palier (3) est pivotant ou fixé.

5. Adaptateur selon l'une quelconque des revendications ci-dessus, **caractérisé en ce que** le bras (4) a la forme d'un "U".

6. Adaptateur selon les revendications 1 à 4, **caractérisé en ce que** les extrémités opposées de deux bras (4) sont connectées par un élément de raccordement (13), ledit élément de raccordement (13) est capable de distribuer la force verticale exercée par l'élément de chargement (10) sur les bras (4).

7. Adaptateur selon l'une quelconque des revendications ci-dessus, **caractérisé en ce que** l'élément de chargement (10) est une rondelle à dents chevauchantes, un raccordement vissé ou un poids.
